# EUROPÄISCHE PATENTANMELDUNG

(11) **EP 4 195 417 A1**
(43) Veröffentlichungstag der Anmeldung: **14.06.2023**
(21) Anmeldenummer: 22211555.2
(22) Anmeldetag: 06.12.2022
(51) Int. Cl.: H01R 4/48, H01R 13/08, H01R 13/58, H01R 13/50, H01R 24/28

(54) **KABELANSCHLUSSDOSE ZUM WERKZEUGLOSEN ANSCHLUSS EINES ANSCHLUSSKABELS**

(30) Priorität: 09.12.2021 DE 202021106710 U; 12.01.2022 DE 202022100141 U
(71) Anmelder: Electro Terminal GmbH & Co KG, 6020 Innsbruck (AT)
(72) Erfinder: MOSER, Peter, 6135 Stans (AT)
(74) Vertreter: Kiwit, Benedikt

(57) **Zusammenfassung**

Die Erfindung betrifft eine Kabelanschlussdose (1) zur elektrischen Verbindung von Adern eines Anschlusskabels mit weiterführenden elektrischen Leitungen an einem elektrischen Gerät. Die Kabelanschlussdose (1) weist ein Gehäuse (2) auf. Das Gehäuse (2) weist ein Gehäuse-Unterteil (3) und einen Gehäuse-Deckel (4) auf, welche wahlweise verschließbar sind, um einen Anschlussraum (A) zu umschließen, und wahlweise öffenbar sind, um den Anschlussraum (A) zum Verbindung der Adern des Anschlusskabels freizulegen. Das Gehäuse weist ferner eine Kabeldurchführung (6) zur Durchführung des Anschlusskabels in den Anschlussraum (A) auf. Die Kabelanschlussdose (1) weist überdies wenigstens ein Kontaktelement (8) mit einem Kontaktabschnitt (80) zur elektrischen Kontaktherstellung mit den Adern des Anschlusskabels in dem Anschlussraum (A) auf. Ferner weist die Kabelanschlussdose (1) eine Anschlussanordnung (9) zum werkzeuglosen Verbinden und Lösen der Adern des Anschlusskabels mit dem Kontaktabschnitt (80).

## Beschreibung

Die vorliegende Erfindung betrifft eine Kabelanschlussdose zur elektrischen Verbindung von Adern eines Anschlusskabels mit weiterführenden elektrischen Leitungen an einem elektrischen Gerät.

Kabelanschlussdosen der eingangs genannten Art sind aus dem Stand der Technik grundsätzlich bekannt. Derartige Kabelanschlussdosen weisen dabei ein Gehäuse auf, in dem mehrere Kontaktstellen bzw. Anschlussstellen zum Anschließen etwaiger Adern eines entsprechenden Anschlusskabels vorgesehen sind. Das Kabel wird in der Regel über eine Zugentlastung der Kabelanschlussdose in deren Gehäuse geführt. Die Anschlussstellen sind in der Regel mittels Schraubkontakten bereitgestellt. Die einzelnen Adern werden dazu in die entsprechenden Anschlussstellen eingeführt und mittels Schrauben mit einem Kontaktelement der Anschlussstelle elektrisch und mechanisch verbunden. Die Zugentlastung dient dabei einer mechanischen Entlastung der elektrischen Anschlussstellen. Nach elektrischem Anschluss der Adern und Schließen der Zugentlastung kann das Gehäuse geschlossen und somit die elektrischen Kontaktstellen sicher vor Berührung verborgen werden. Kabelanschlussdosen unterscheiden sich demnach von einfachen Anschluss- und Verbindungsklemmen nicht nur in Aufbau, Einsatzzweck und Größe, sondern auch durch ihre Eigenschaft, wahlweise geöffnet und geschlossen zu werden, sowie durch die grundsätzlich lösbaren Anschlussstellen und oft auch durch die optionale Zugentlastung. Die vorbeschriebenen Kabelanschlussdosen werden Geräte-seitig an einem Befestigungsbereich eines elektrischen Geräts mit in der Regel definiertem Lochbild zum eindeutigen Einsetzen der Kabelanschlussdose befestigt. Die entsprechenden weiterführenden elektrischen Leitungen des elektrischen Geräts werden dann rückseitig des Befestigungsbereichs an die entsprechenden Kontaktelemente angeschlossen. Somit können die jeweiligen Adern des Anschlusskabels über die Kontaktelemente mit den weiterführenden elektrischen Leitungen elektrisch verbunden werden. Grundsätzlich kann die Kabelanschlussdose ferner einen Erdungskontakt aufweisen, mittels dem die Kabelanschlussdose bspw. über eines der Kontaktelemente zur Erdung mit dem elektrischen Gerät verbunden bzw. verbindbar ist. Durch die in der Regel als Schraubverbindung bereitgestellte elektrische Kontaktierung der Adern kann eine sichere aber zur Montage aufwendige elektrische Kontaktierung ermöglicht werden.

Aus dem Stand der Technik sind darüber hinaus auch schraubenlose Kontaktstellen bekannt, wie beispielsweise als Käfigklemmen ausgebildete Kontaktklemmbereich. Diese können mittels eines Werkzeugs, wie beispielsweise eines Schraubendrehers, durch Einführen des Werkzeugs in eine Öffnung eines die Käfigklemme aufnehmenden Gehäuseabschnitts in eine geöffnete Position überführt werden, so dass dann bspw. ein entsprechender flexibler Leiter in die Kontaktstelle eingeführt werden kann. Durch Herausnehmen des Werkzeugs wird dann der eingeführte Leiter in der Kontaktstelle verklemmt.

Es ist nunmehr eine Aufgabe der vorliegenden Erfindung, eine Kabelanschlussdose der eingangs genannten Art bereitzustellen, welche ein einfaches Anschließen eines Anschlusskabels ohne zusätzliche Hilfsmittel ermöglicht.

Die vorbeschriebene Aufgabe wird durch den Gegenstand des unabhängigen Anspruchs gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung eine Kabelanschlussdose zur elektrischen Verbindung von Adern eines Anschlusskabels mit weiterführenden elektrischen Leitungen an einem elektrischen Gerät. Die Kabelanschlussdose weist ein Gehäuse auf. Das Gehäuse wiederum weist ein Gehäuse-Unterteil und einen Gehäuse-Deckel auf, welche wahlweise verschließbar sind, um einen Anschlussraum zu umschließen, und wahlweise öffenbar sind, um den Anschlussraum zum Verbindung der Adern des Anschlusskabels freizulegen. Das Gehäuse weist ferner eine Kabeldurchführung zur Durchführung des Anschlusskabels in den Anschlussraum auf. Ferner kann das Gehäuse vorzugsweise eine Zugentlastung zum Arretieren des durch die Kabeldurchführung geführten Anschlusskabels in der Kabelanschlussdose aufweisen. Die Kabelanschlussdose weist zudem wenigstens ein Kontaktelement mit einem Kontaktabschnitt zur elektrischen Kontaktherstellung mit den Adern des Anschlusskabels in dem Anschlussraum auf. Des Weiteren weist die Kabelanschlussdose eine Anschlussanordnung zum werkzeuglosen (elektrischen) Verbinden und Lösen der Adern des Anschlusskabels mit dem Kontaktabschnitt auf.

Mittels der vorbeschriebenen Kabelanschlussdose und insbesondere deren Anschlussanordnung wird es ermöglicht, ohne die Zuhilfenahme von weiteren Hilfsmitteln und Werkzeugen, wie bspw. eines Schraubendrehers und dgl., - mithin also werkzeuglos - die Adern eines Anschlusskabels mit den Kontaktabschnitten entsprechend elektrisch (und bevorzugt auch mechanisch) zu verbinden und diese ebenso werkzeuglos auch wieder zu lösen. Die erfindungsgemäße Kabelanschlussdose kann so auch im direkten Austausch mit bekannten Kabelanschlussdosen verwendet werden, da deren äußere Struktur bevorzugt nicht durch die Anschlussanordnung beeinträchtigt wird.

Die optionale Zugentlastung kann bevorzugt durch einen Zugentlastungsbügel gebildet sein bzw. diesen aufweisen, welcher beispielsweise schwenkbar in dem Gehäuse (bspw. dem Gehäuse-Unterteil) zwischen einer Offenstellung, in der die Zugentlastung bzw. die Kabeldurchführung zum Einlegen eines Anschlusskabels freiliegt, und einer Geschlossenstellung, in der die Zugentlastung bzw. die Kabeldurchführung (wenigstens teilweise) geschlossen ist (bspw. indem der Zugentlastungsbügel mit dem Gehäuse (bspw. Gehäuse-Unterteil) ein eingelegtes Anschlusskabel einklemmt), bewegbar ist. Der Zugentlastungsbügel kann in der Geschlossenstellung mit dem Gehäuse (lösbar) verrasten. Die Zugentlastung kann alternativ oder ergänzend beispielsweise auch Klemmabschnitte des Gehäuses, bspw. des Gehäuse-Unterteils und des Gehäuse-Deckels, und bevorzugt ferner des Zugentlastungsbügels (dann bspw. wenigstens durch Gehäuse-Unterteil und Zugentlastungsbügel) aufweisen, um wenigstens im geschlossenen Zustand des Gehäuses ein durch die Kabeldurchführung geführtes Anschlusskabel in der Kabelanschlussdose zu arretieren. Hierzu können die korrespondierenden Klemmabschnitte entsprechend auf das Gehäuse-Unterteil und den Gehäuse-Deckel bzw. den Zugentlastungsbügel derart verteilt sein, um im geschlossenen Zustand des Gehäuses ein durch die Kabeldurchführung geführtes Anschlusskabel in der Kabelanschlussdose zu arretieren. Die Klemmabschnitte können dabei wenigstens im geschlossenen Zustand des Gehäuses wenigstens teilweise im Bereich der oder in Verlängerung der Kabeldurchführung vorgesehen sein; bevorzugt die Kabeldurchführung wenigstens teilweise seitlich bzw. beidseits (also oben und unten) begrenzen.

Das Kontaktelement und/oder die Anschlussanordnung kann/können wenigstens teilweise in einem Gehäuseabschnitt des Gehäuses, wie vorzugsweise des Gehäuseunterteils, aufgenommen sein. Somit kann der Aufbau der Kabelanschlussdose und insbesondere des Gehäuses vereinfacht sein. Zudem kann das entsprechend in dem Gehäuseabschnitt aufgenommene Element, wie beispielsweise das Kontaktelement und/oder die Anschlussanordnung, sicher und stabil vorgesehen sein.

Das Gehäuse ist bevorzugt aus einem Isolierstoffmaterial und besonders bevorzugt in einem Kunststoffspritzgussverfahren hergestellt. Somit kann das Gehäuse in besonders einfacher Weise bereitgestellt werden und erlaubt einen sicheren Einsatz der Kabelanschlussdose.

Der Gehäuseabschnitt kann eine Einführöffnung zum Einführen wenigstens einer der Adern des Anschlusskabels zu dem Kontaktabschnitt hin aufweisen. Somit kann der Kontaktabschnitt einerseits sicher aufgenommen sein, während er andererseits für eine anzuschließende Ader des Anschlusskabels einfach zu erreichen ist.

Die Anschlussanordnung kann ein Klemmelement aufweisen, welches zwischen einer Klemmposition, in der das Klemmelement mit dem Kontaktabschnitt eine Klemmstelle zum elektrischen Verbinden der Adern des Anschlusskabels bildet, und einer Freigabeposition, in der die Klemmstelle zum Lösen der Adern des Anschlusskabels freigelegt ist, werkzeuglos bewegbar ist. Auf diese Weise kann die Anschlussanordnung ein vergleichsweise einfach ausgeprägtes Klemmelement aufweisen. Durch dessen einfache Bewegbarkeit zwischen der beschriebenen Klemmposition und der Freigabeposition kann zudem ein einerseits einfacher und andererseits wirkungsvoller elektrischer Anschluss der entsprechenden Adern des Anschlusskabels ermöglicht werden.

Das Klemmelement kann bevorzugt eine Klemmfeder mit wenigstens einem Klemmschenkel aufweisen, welcher zwischen der Klemmposition und der Freigabeposition verschwenkbar ist. Somit kann das Klemmelement einerseits in seiner Struktur einfach ausgebildet sein. In Ausprägung einer Klemmfeder kann zudem eine ausreichend und beliebig definierbare Klemmkraft zum sicheren elektrischen Verbinden entsprechender Adern eines Anschlusskabels bereitgestellt werden.

Der Klemmschenkel kann bevorzugt an einem distalen Ende eine Klemmkante zur Bildung der Klemmstelle mit dem Kontaktabschnitt aufweisen. Auf diese Weise kann eine besonders effektive Klemmstelle bereitgestellt werden. Besonders bevorzugt kann die Klemmkante zu einem Verkeilen der eingeführten Ader zwischen dem Klemmschenkel und dem Kontaktabschnitt dienen, so dass aufgrund dieser strukturellen Keilverbindung bevorzugt die Klemmkräfte reduzierter ausgebildet und somit insgesamt die Kabelanschlussdose einfacher ausgebildet sein kann, während deren Klemmwirkung weiterhin stabil bereitgestellt ist.

In einer bevorzugten Ausgestaltungsform kann die Klemmfeder geschlitzt ausgebildet sein, um wenigstens zwei unabhängig voneinander verschwenkbare Klemmschenkel zu bilden. Somit können bevorzugt im Bereich eines Kontaktabschnitts wenigstens zwei Klemmstellen bereitgestellt werden. Dies auf besonders einfache Weise, da lediglich strukturell eine Klemmfeder bereitgestellt werden muss, was auch das Handling beispielsweise zur Montage derselben erleichtert. Die zwei Klemmschenkel können dann beispielsweise zur Aufnahme zweier unterschiedlicher Adern des Anschlusskabels oder zum Anschluss von Adern mehrere Anschlusskabel oder auch beispielsweise zum Anschluss zusätzlich eines separaten Erdungskontakts dienen, welche unabhängig voneinander mit dem Kontaktelement verbunden werden können. Die Klemmstellen können bevorzugt auch unabhängig voneinander bedient werden, so dass diese beim Manipulieren des jeweils anderen - beispielsweise zum Herausnehmen oder Einführen eines entsprechend elektrischen Elements - nicht beeinträchtigt werden. Zudem können die jeweiligen Klemmstellen Ihrer Funktion entsprechend beliebig ausgebildet werden.

Das Klemmelement kann bevorzugt in dem Gehäuse und/oder in dem Kontaktelement gelagert sein. Je nach Ausgestaltung des Klemmelements kann dieses somit in beliebiger und besonders vorteilhafter Weise gelagert werden.

Der Kontaktabschnitt kann bevorzugt zusammen mit dem Klemmelement und vorzugsweise mit dem Klemmschenkel der Klemmfeder, wenn vorhanden, einen Einführkanal zum Einführen der Adern des Anschlusskabels in eine Einführrichtung wenigstens teilweise seitlich begrenzen. Auf diese Weise kann eine einzuführende Ader des Anschlusskabels sicher zu dem Kontaktabschnitt bzw. in Anlage mit diesem zur elektrischen Kontaktierung geführt werden. Sofern das Gehäuse den vorbeschriebenen Gehäuseabschnitt mit Einführöffnung aufweist, kann der Einführkanal besonders bevorzugt mit eben dieser Einführöffnung fluchten. Somit kann eine besonders effektive Einführung der Adern des Anschlusskabels zur sicheren elektrischen Kontaktherstellung mit dem Kontaktabschnitt bereitgestellt werden.

Die Anschlussanordnung kann bevorzugt ein Löseelement aufweisen, welches mit einem Manipulationsabschnitt des Klemmelements derart zusammenwirkt, um das Klemmelement wenigstens teilweise zwischen der Klemmposition und der Freigabeposition zu bewegen. Während ohne dieses Löseelement das werkzeuglose Verbinden und Lösen der Adern des Anschlusskabels mit dem Kontaktabschnitt beispielsweise einfach durch die Finger eines Bedieners erzielt werden kann, der beispielsweise ein entsprechendes Klemmelement durch entsprechendes Drücken von der Klemmposition in die Freigabeposition bewegt, so kann mittels des bevorzugt vorgesehenen Löseelements diese Bewegung insbesondere des Klemmelements vereinfacht werden. Zum einen deswegen, da das Löseelement dann definiert vorgesehen ist und somit ebenso eine definierte und bediensichere Überführung des Klemmelements von der Klemmposition in die Freigabeposition vorgibt. Andererseits auch deswegen, weil das Löseelement beispielsweise zu einem komfortablen Betätigen des Klemmelements (z.B. mit einem großflächigen Druckbereich) ausgebildet sein kann, was den Bedienkomfort der Kabelanschlussdose erhöht.

Der Manipulationsabschnitt kann sich bevorzugt von dem Klemmschenkel und besonders bevorzugt von dessen Klemmkante weg erstrecken. Beispielsweise ist es denkbar, dass sich in Verlängerung des Klemmschenkels der Manipulationsabschnitt mittig desselben, einseitig (bspw. bzgl. der Mittelachse des Klemmschenkels) oder beidseitig (bspw. bzgl. der Mittelachse des Klemmschenkels) beispielsweise von der Klemmkante in Verlängerung erstreckt. Der Manipulationsabschnitt kann somit bevorzugt direkt (bspw. integral) mit dem Klemmschenkel bereitgestellt werden, was eine besonders effektive Betätigung des Klemmelements ermöglicht. So kann beispielsweise die Klemmfeder als Stanz-Biege-Teil mit entsprechendem Stanzausschnitt den Manipulationsabschnitt direkt bereitstellt.

Das Löseelement kann wenigstens teilweise in dem Kontaktelement und/oder in dem Gehäuse - wie vorzugsweise dem Gehäuseabschnitt, wenn vorhanden - beweglich gelagert sein. Bei dieser beweglichen Lagerung kann es sich beispielsweise um eine translatorische und/oder rotatorische bewegliche Lagerung handeln. Folglich kann das Löseelement zur einfachen Betätigung sicher in einem definierten Bereich der Kabelanschlussdose gelagert sein.

Das Löseelement kann beispielsweise einen Drücker oder einen Lösehebel aufweisen. Ein Drücker kann beispielsweise translatorisch beweglich gelagert vorgesehen sein. Der Lösehebel kann beispielsweise rotatorisch und ferner bevorzugt translatorisch beweglich gelagert sein. Somit können vergleichsweise einfach gestaltete Löseelemente zur effektiven Betätigung des Klemmelements bereitgestellt werden.

Der Lösehebel kann einen Lagerabschnitt zur drehbaren Lagerung des Lösehebels um eine Drehachse herum aufweisen. Somit kann eine strukturell einfache Lagerstruktur zur effektiven Betätigung des Lösehebels bereitgestellt werden. Dabei kann der besagte Lagerabschnitt besonders bevorzugt zur drehbaren Lagerung in einem Lagerungsabschnitt des Gehäuses oder des Gehäuseabschnitts, wenn vorhanden, ausgebildet sein. Durch die Bereitstellung des Lagerungsabschnitts im Gehäuse kann dieser beliebig an die Anforderungen des Lösehebels ausgebildet sein. Dies umso mehr, wenn das Gehäuse aus Kunststoff beispielsweise in einem Spritzgussverfahren hergestellt ist. Der Lagerungsabschnitt kann somit in beliebiger Weise und beliebiger Stabilität - beispielsweise durch Anpassung der Wandstärke - dem Lösehebel und den geforderten Lösekräften entsprechend ausgebildet sein.

Gemäß einer bevorzugten Ausgestaltungsform kann der Lösehebel einen zur Drehachse radial beabstandeten Hebelabschnitt aufweisen, welcher derart mit einem Konterabschnitt des Kontaktelements und/oder des Gehäuses - wie beispielsweise des Gehäuseabschnitts - zusammenwirkt, so dass die Drehachse bei der Drehbewegung des Lösehebels in die Freigabeposition zu der Freigabeposition hin versetzt wird. Auf diese Weise kann es ermöglicht werden, dass der Lösehebel zusätzlich zu der Drehbewegung auch translatorisch bewegt wird, so dass der Manipulationsabschnitt einen vergrößerten Betätigungsweg ausführt, was wiederum bei kompakter Bauweise zu einem vergleichsweise großen Betätigungsweg und somit einer besonders effektiven Überführung von der Klemmposition in die Freigabeposition führt.

Der Lösehebel kann einen sich bevorzugt von der Drehachse radial weg erstreckenden Hebelarm zur Bewegung bzw. zur Drehung des Lösehebels zwischen der Freigabeposition und der Klemmposition aufweisen. Dieser Hebelarm (beispielsweise als flach von der Drehachse vorstehender Griff ausgebildet) ermöglicht ein besonders einfaches Betätigen des Lösehebels beispielsweise durch die Finger eines Bedieners.

Das Löseelement bzw. der Drücker oder der Lösehebel sind bevorzugt aus einem Isolierstoffmaterial und insbesondere als Kunststoff-Spritzgussteil bereitgestellt. Somit können diese als sichere Komponenten und zudem in besonders einfacher und kostengünstiger Weise bereitgestellt werden.

Das Kontaktelement kann sich mit einem Anschlussabschnitt zum elektrischen Anschluss mit weiterführenden elektrischen Leitungen an einem elektrischen Gerät aus dem Anschlussraum und von diesem weg nach außerhalb des Gehäuses erstrecken; dies bevorzugt von dem Gehäuse-Unterteil und ferner bevorzugt zu einer Seite von dem Gehäuse-Deckel weg gerichtet. Auf diese Weise kann die Kabelanschlussdose in einfacher Weise mit einem elektrischen Gerät mechanisch und elektrisch verbunden werden. Beispielsweise kann die Kabelanschlussdose so in bekannter Weise in ein definiertes Lochbild auf Seiten des elektrischen Gerätes in dieses eingesetzt und rückseitig des Lochbilds (beispielsweise bereitgestellt in einer Befestigungsplatte) rückseitig elektrisch mit den weiterführenden elektrischen Leitungen an dem elektrischen Gerät elektrisch angebunden werden. Über die Kontaktelemente kann dann mit Hilfe der Anschlussanordnung ein Anschlusskabel - genauer dessen Adern bzw. Leiter - entsprechend einfach werkzeuglos verbunden bzw. gelöst werden.

Die Kabelanschlussdose kann ferner einen Erdungskontakt aufweisen, welcher mit dem Kontaktelement in elektrischer Verbindung steht oder integral mit diesem ausgebildet ist. Auf diese Weise kann die Kabelanschlussdose in einfacher und sicherer Weise gegenüber dem elektrischen Gerät geerdet werden. Somit kann die Kabelanschlussdose in höchst sicherer Weise bereitgestellt werden.

Der Erdungskontakt kann bevorzugt über die Anschlussanordnung mit dem Kontaktabschnitt elektrisch verbunden sein. Somit kann die Anschlussanordnung, neben dem werkzeuglosen Verbinden und Lösen der Adern des Anschlusskabels mit dem Kontaktabschnitt, ebenso zum einfachen werkzeuglosen Verbindung und Lösen eines entsprechenden Erdungskontakts verwendet werden. Dies erleichtert nicht nur das Vorsehen eines entsprechenden Erdungskontaktes. Zudem kann auch die Gesamtstruktur der Kabelanschlussdose einheitlich und somit in der Herstellung kostengünstig und ferner in der Montage vereinfacht bereitgestellt werden.

Das Kontaktelement ist bevorzugt als Stanz-Biege-Teil ausgebildet. Ebenso kann auch, wie zuvor bereits beschrieben, das Klemmelement beispielsweise in Form einer Klemmfeder als Stanz-Biege-Teil ausgebildet sein. Somit können diese Bauteile auf herkömmliche Weise und dies besonders kostengünstig bereitgestellt werden.

Die Kabelanschlussdose kann bevorzugt eine Vielzahl von Kontaktelementen oder Kontaktabschnitten, denen jeweils eine Anschlussanordnung zum werkzeuglosen elektrischen Verbinden und Lösen der Adern des Anschlusskabels mit dem jeweiligen Kontaktabschnitt zugeordnet ist, aufweisen. Somit können dem jeweiligen Zweck der Kabelanschlussdose entsprechend beliebig viele Kontaktabschnitte bzw. Kontaktelemente bereitgestellt werden (beispielsweise zum Anschluss an elektrische Geräte mit Starkstrom).

Das Gehäuse-Unterteil und der Gehäuse-Deckel können bevorzugt über ein Verbindungselement, wie ein Scharnier, beweglich miteinander verbunden sein, um den Anschlussraum wahlweise freizulegen bzw. zu verschließen. Das Scharnier kann dabei durch integrale oder zusätzliche Bauteile und Strukturen bereitgestellt werden, welche es ermöglichen, das Gehäuse-Unterteil und den Gehäuse-Deckel beweglich zu verbinden. Beispielsweise kann das Verbindungselement auch integral zwischen dem Gehäuse-Unterteil und dem Gehäuse-Deckel mit eben diesen ausgebildet sein; beispielsweise in Form eines Filmscharniers.

Weitere Ausgestaltungen und Vorteile der vorliegenden Erfindung werden anhand der Figuren der begleitenden Zeichnungen im Folgenden beschrieben. Es zeigen:
- Fig. 1: eine perspektivische Ansicht einer Kabelanschlussdose mit geöffnetem Gehäuse sowie geöffneter Zugentlastung gemäß einem ersten Ausführungsbeispiel der vorliegenden Erfindung mit geschlossener Anschlussanordnung,
- Fig. 2: eine perspektivische Ansicht der Kabelanschlussdose gemäß Fig. 1 mit geöffneter Anschlussanordnung,
- Fig. 3: eine Seitenansicht der Kabelanschlussdose gemäß Fig. 1,
- Fig. 4: eine stirnseitige Ansicht der Kabelanschlussdose gemäß Fig. 3 in Blickrichtung IV gesehen,
- Fig. 5: eine Draufsicht auf die Kabelanschlussdose gemäß Fig. 3 in Blickrichtung V gesehen,
- Fig. 6: eine andere perspektivische Ansicht der Kabelanschlussdose gemäß Fig. 1,
- Fig. 7: eine seitliche Schnittansicht der Kabelanschlussdose gemäß Fig. 1 mit geschlossener Anschlussanordnung,
- Fig. 8: eine seitliche Schnittansicht der Kabelanschlussdose gemäß Fig. 2 mit geöffneter Anschlussanordnung,
- Fig. 9: eine seitliche Schnittansicht des Kontaktelements mit (geschlossener) Anschlussanordnung der Kabelanschlussdose gemäß Fig. 7,
- Fig. 10: eine Seitenansicht der Komponenten gemäß Fig. 9,
- Fig. 11: eine rückseitige Ansicht der Komponenten gemäß Fig. 10 in Blickrichtung XI gesehen,
- Fig. 12: eine Draufsicht auf die Komponenten gemäß Fig. 10 in Blickrichtung XII gesehen,
- Fig. 13: eine perspektivische Ansicht der Komponenten gemäß Fig. 10,
- Fig. 14: eine seitliche Schnittansicht des Kontaktelements mit (geöffneter) Anschlussanordnung der Kabelanschlussdose gemäß Fig. 8,
- Fig. 15: eine Seitenansicht der Komponenten gemäß Fig. 14,
- Fig. 16: eine rückseitige Ansicht der Komponenten gemäß Fig. 15 in Blickrichtung XVI gesehen,
- Fig. 17: eine Draufsicht auf die Komponenten gemäß Fig. 15 in Blickrichtung XVII gesehen,
- Fig. 18: eine perspektivische Ansicht der Komponenten gemäß Fig. 15,
- Fig. 19: eine perspektivische Explosionsdarstellung einer alternativen Ausgestaltungsform von Kontaktelement mit Anschlussanordnung für eine erfindungsgemäße Kabelanschlussdose,
- Fig. 20: eine perspektivische Ansicht von Kontaktelementen mit Anschlussanordnung gemäß Fig. 19 in funktionaler Positionierung zueinander in geschlossener Stellung der Anschlussanordnung, und
- Fig. 21: eine perspektivische Ansicht der Komponenten gemäß Fig. 20 in funktionaler Positionierung zueinander in geöffneter Stellung der Anschlussanordnung.

Die Figuren zeigen zwei Ausführungsbeispiele einer Kabelanschlussdose 1 bzw. von deren Komponenten. Die Kabelanschlussdose 1 gemäß der vorliegenden Erfindung dient zur elektrischen Verbindung von Adern eines Anschlusskabels (nicht gezeigt) mit weiterführenden elektrischen Leitungen an einem elektrischen Gerät (nicht gezeigt). Als elektrische Geräte kommen dabei alle denkbaren elektrischen Geräte, wie beispielsweise Haushaltsgeräte, in Frage.

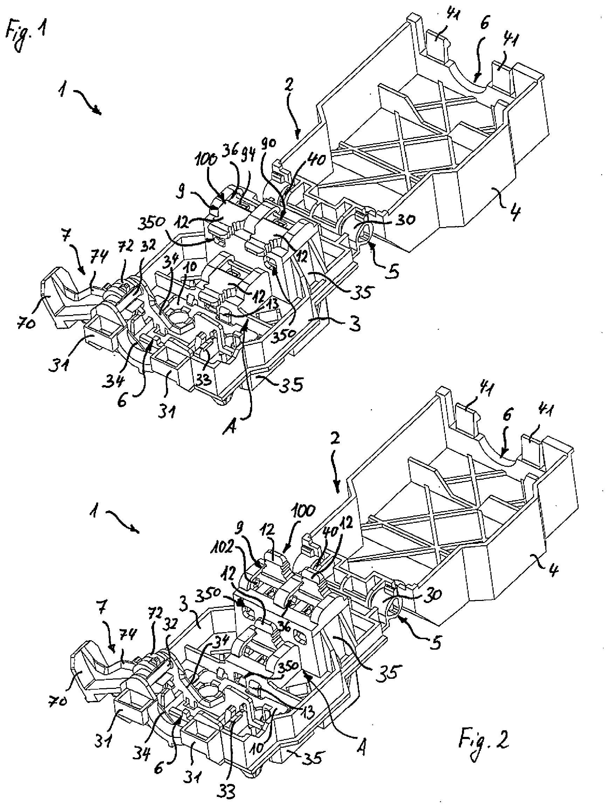

Insbesondere mit Blick auf die Figuren 1 bis 8 weist die Kabelanschlussdose 1 ein Gehäuse 2 auf. Das Gehäuse 2 ist bevorzugt aus einem Isolierstoffmaterial hergestellt. Bevorzugt ist das Gehäuse 2 als Kunststoffspritzgussteil hergestellt.

Das Gehäuse 2 weist ein Gehäuse-Unterteil 3 sowie einen Gehäuse-Deckel 4 auf. Das Gehäuse-Unterteil 3 und der Gehäusedeckel 4 sind wahlweise verschließbar, um einen Anschlussraum A zu umschließen bzw. zu verschließen, und wahlweise öffenbar (vgl. Figuren 1 bis 8) um den Anschlussraum A zum Verbinden der Adern des Anschlusskabels freizulegen.

Das Gehäuse-Unterteil 3 und der Gehäuse-Deckel 4 können bevorzugt über ein Verbindungselement 5 beweglich miteinander verbunden sein, um den Anschlussraum A wahlweise freizulegen und zu verschließen. Wie insbesondere in den Figuren 1 und 2 zu entnehmen ist, kann das Verbindungselement 5 beispielsweise als Scharnier ausgebildet sein. Die Gehäuseteile 3, 4 weisen hierzu bevorzugt miteinander korrespondierende Strukturelemente 30, 40 auf, über die das Gehäuse-Unterteil 3 mit dem Gehäuse-Deckel 4 entsprechend schwenkbar gekoppelt werden können. Es ist beispielsweise auch denkbar, dass das Verbindungselement 5 als zwischen dem Gehäuse-Unterteil 3 und dem Gehäuse-Deckel 4 integral ausgebildetes Element, wie beispielsweise in Form eines Filmscharniers, ausgebildet ist.

Die Kabelanschlussdose 1 weist des Weiteren eine Kabeldurchführung 6 zur Durchführung des Anschlusskabels in den Anschlussraum A auf. Die Kabeldurchführung 6 ist hier integral durch das Gehäuse 2 gebildet. Die Kabeldurchführung 6 befindet sich dabei in einer Trennebene des Gehäuse-Unterteils 3 und des Gehäuse-Deckels 4 und hier beispielhaft an einem den Verbindungselement 5 gegenüberliegenden Ende des Gehäuses 2. Die Kabeldurchführung 6 ist hier bevorzugt als Rücksprung in den jeweiligen Gehäuseteilen 3, 4 von der Trennebene weg bereitgestellt.

Wie insbesondere den Figuren 1, 2 und 6 zu entnehmen ist, können die Gehäuseteile 3, 4 miteinander korrespondierende Rastelemente 31, 41 aufweisen, über die die Gehäuseteile 3, 4 im geschlossenen Zustand miteinander sicher und ebenso lösbar verrasten. Alternativ oder ergänzend können Gehäuse-Unterteil 3 und Gehäuse-Deckel 4 auch durch andere Strukturelemente und/oder separate Elemente, wie eine Schraube, in der geschlossenen Position miteinander arretiert werden.

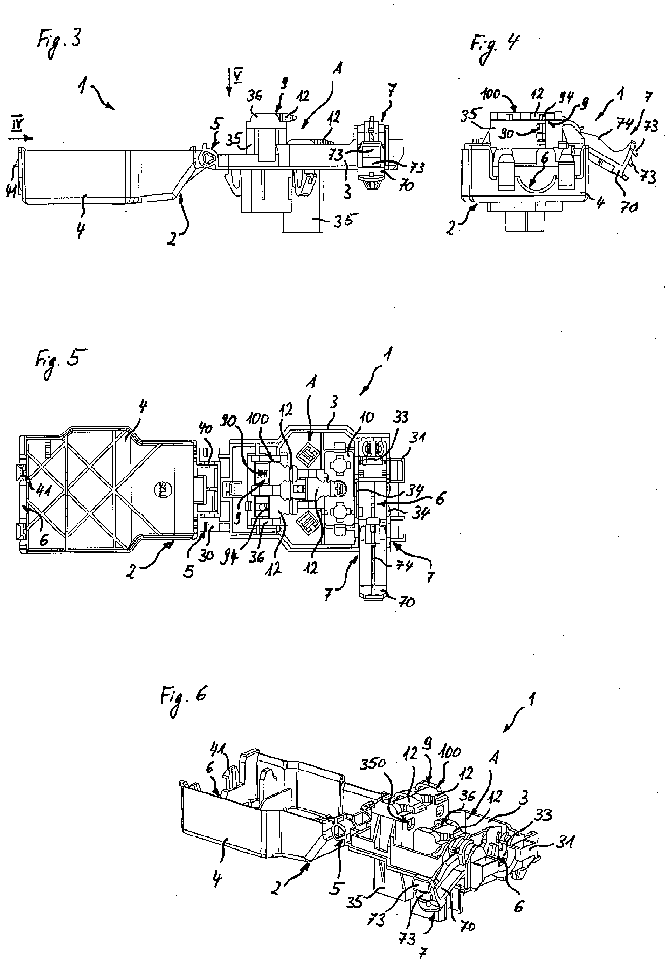

Das Gehäuse 2 kann des Weiteren eine Zugentlastung 7 zum Arretieren des durch die Kabeldurchführung 6 geführten Anschlusskabels in der Kabelanschlussdose 1 aufweisen. Die Zugentlastung 7 ist dabei besonders deutlich in den Figuren 1 bis 6 erkennbar. Die Zugentlastung 7 ist hier beispielsweise durch einen Zugentlastungsbügel 70 gebildet bzw. weist diesen auf, welcher bevorzugt schwenkbar in dem Gehäuse 2 über korrespondierende Schwenkstrukturen 32, 72 gelagert ist. Wie insbesondere der Fig. 6 zu entnehmen ist, weisen der Zugentlastungsbügel 70 sowie das Gehäuse 2 - hier das Gehäuse-Unterteil 3 - korrespondierende Raststrukturen 33, 73 auf, über die der von der hier dargestellten Offenposition in die Geschlossenposition geschwenkte Zugentlastungsbügel 70 sicher verrastet werden kann. Dabei weist der Zugentlastungsbügel 70 hier vorzugsweise zwei Raststrukturen 73 auf, um den Zugentlastungsbügel für unterschiedliche Anschlusskabeldurchmesser in unterschiedlichen Rastpositionen gegenüber dem Gehäuse 2 bzw. der Gehäuse-seitigen Raststruktur 33 zu positionieren. Über korrespondierende Klemmabschnitte 34, 74 kann das Anschlusskabel sicher in der Zugentlastung 7 hier zwischen dem Zugentlastungsbügel 70 und dem Gehäuse-Unterteil 3 gehalten werden, um insbesondere längs des Anschlusskabels wirkende Zugkräfte aufzunehmen, um somit die in der Kabelanschlussdose 1 elektrisch angeschlossenen Adern gegenüber entsprechenden Zugkräften zu entlasten. Alternativ oder ergänzend ist es auch denkbar, dass die korrespondierenden Klemmabschnitte 34, 74 entsprechend auf das Gehäuse-Unterteil 3 und den Gehäuse-Deckel 4 verteilt sind und im geschlossenen Zustand des Gehäuses 2 ein durch die Kabeldurchführung 6 geführtes Anschlusskabel in der Kabelanschlussdose 1 halten; wahlweise ferner mittels des vorbeschriebenen Zugentlastungsbügels 70. Die Klemmabschnitte 34, 74 sind wenigstens im geschlossenen Zustand des Gehäuses 2 wenigstens teilweise im Bereich der oder in Verlängerung der Kabeldurchführung 6 vorgesehen; bevorzugt seitlich bzw. beidseits der Kabeldurchführung 6.

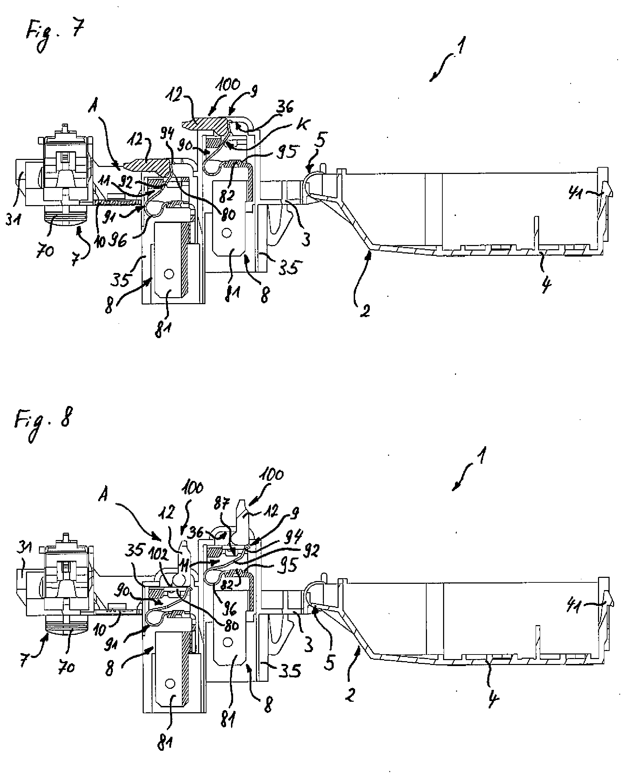

Die Kabelanschlussdose 1 weist des Weiteren wenigstens ein und im vorliegenden Ausführungsbeispiel drei Kontaktelemente 8 mit jeweils einem Kontaktabschnitt 80 zur elektrischen Kontaktherstellung mit den Adern des Anschlusskabels in dem Anschlussraum A. Dies ist insbesondere den Darstellungen der Figuren 7 bis 21 zu entnehmen.

Das Kontaktelement 8 ist bevorzugt als Stanz-Biege-Teil ausgebildet.

Das Kontaktelement 8 kann sich mit einem Anschlussabschnitt 81 zum elektrischen Anschluss mit weiterführenden elektrischen Leitungen an einem elektrischen Gerät aus dem Anschlussraum A und von diesem weg nach Außerhalb des Gehäuses 2 - und hier insbesondere des Gehäuse-Unterteils 3 - erstrecken, wie dies insbesondere den Schnittdarstellungen der Figuren 7 und 8 zu entnehmen ist.

Wie insbesondere den Figuren 1, 2, 5, 7 und 8 zu entnehmen ist, kann die Kabelanschlussdose 1 ferner bevorzugt einen Erdungskontakt 10 aufweisen, welcher mit dem Kontaktelement 8 in elektrischer Verbindung steht, wie dies insbesondere den Figuren 1 und 2 zu entnehmen ist. Alternativ kann der Erdungskontakt 10 mit dem Kontaktelement 8 auch integral ausgebildet sein.

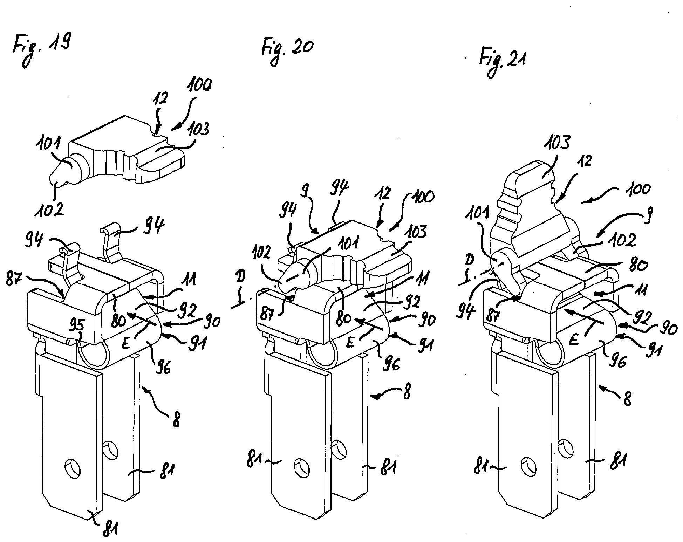

Die Kabelanschlussdose 1 weist des Weiteren eine Anschlussanordnung 9 zum werkzeuglosen (elektrischen) Verbinden und Lösen der Adern des Anschlusskabels mit dem Kontaktabschnitt 80 auf. Dabei zeigen die Figuren 1 bis 18 eine erste Ausgestaltungsform einer entsprechenden Anschlussanordnung 9 sowie das damit zusammenwirkende Kontaktelement 8, und die Figuren 19 bis 21 eine entsprechende zweite Ausgestaltungsform eben dieser Komponenten. Soweit nicht anders beschrieben, gelten die in dieser Anmeldung beschriebenen Merkmale gleichermaßen für beide Ausgestaltungsformen und entsprechend damit ausgestatteter Kabelanschlussdosen 1.

Wie bereits beschrieben, kann die Kabelanschlussdose 1 bevorzugt eine Vielzahl von Kontaktelementen 8 bzw. Kontaktabschnitten 80 aufweisen, denen dann jeweils eine Anschlussanordnung 9 zum werkzeuglosen elektrischen Verbinden und Lösen der Adern des Anschlusskabels mit dem jeweiligen Kontaktabschnitt 80 zugeordnet ist, wie dies beispielsweise den Figuren 1, 2, 5 und 6 deutlich zu entnehmen ist.

Das Kontaktelement 8 und/oder die Anschlussanordnung 9 kann/können wenigstens teilweise in einem Gehäuseabschnitt 35 des Gehäuses 2 und hier vorzugsweise des Gehäuse-Unterteils 3 aufgenommen sein. Wie insbesondere den Figuren 7 und 8 zu entnehmen ist, sind in dem dargestellten Ausführungsbeispiel der Kabelanschlussdose 1 sowohl das Kontaktelement 8 als auch die Anschlussanordnung 9 in dem Gehäuseabschnitt 35 aufgenommen; das Kontaktelement 8 dabei vollständig und die Anschlussanordnung 9 dabei teilweise.

Der Gehäuseabschnitt 35 kann, wie insbesondere den Figuren 1, 2 und 6 zu entnehmen ist, eine Einführöffnung 350 zum Einführen wenigstens einer der Adern des Anschlusskabels zu dem Kontaktabschnitt 80 hin aufweisen. Die Einführöffnung 350 ist hier als Aussparung bzw. Durchbruch in dem Gehäuse 2 bzw. Gehäuse-Unterteil 3 bzw. dem entsprechenden Gehäuseabschnitt 35 ausgebildet.

Die Anschlussanordnung 9 kann bevorzugt ein Klemmelement 90 aufweisen, wie dies besonders deutlich den Figuren 7 bis 9, 14 und 19 zu entnehmen ist. Dieses Klemmelement 90 ist dabei zwischen einer Klemmposition (vgl. Figuren 1, 2 bis 7, 9 bis 13 und 20), in der das Klemmelement 90 mit dem Kontaktabschnitt 80 eine Klemmstelle K zum elektrischen Verbinden der Adern des Anschlusskabels bildet, und einer Freigabeposition (vgl. Figuren 2, 8, 14 bis 18 und 21), in der die Klemmstelle K zum Lösen der Adern des Anschlusskabels freigelegt ist, werkzeuglos bewegbar.

Das Klemmelement 90 kann bevorzugt eine Klemmfeder 91 aufweisen, wie dies insbesondere den Figuren 7 bis 21 zu entnehmen ist. Die Klemmfeder 91 wiederum kann wenigstens einen Klemmschenkel 92 aufweisen, welcher zwischen der Klemmposition und der Freigabeposition verschwenkbar ist, wie dies besonders bevorzugt den seitlichen Schnittansichten der Figuren 7 bis 9 und 14 zu entnehmen ist.

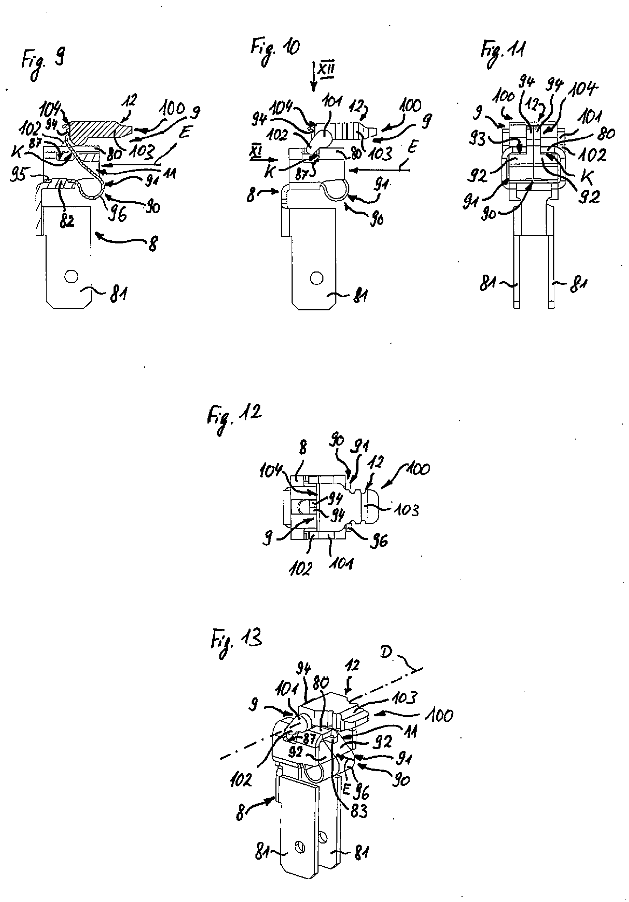

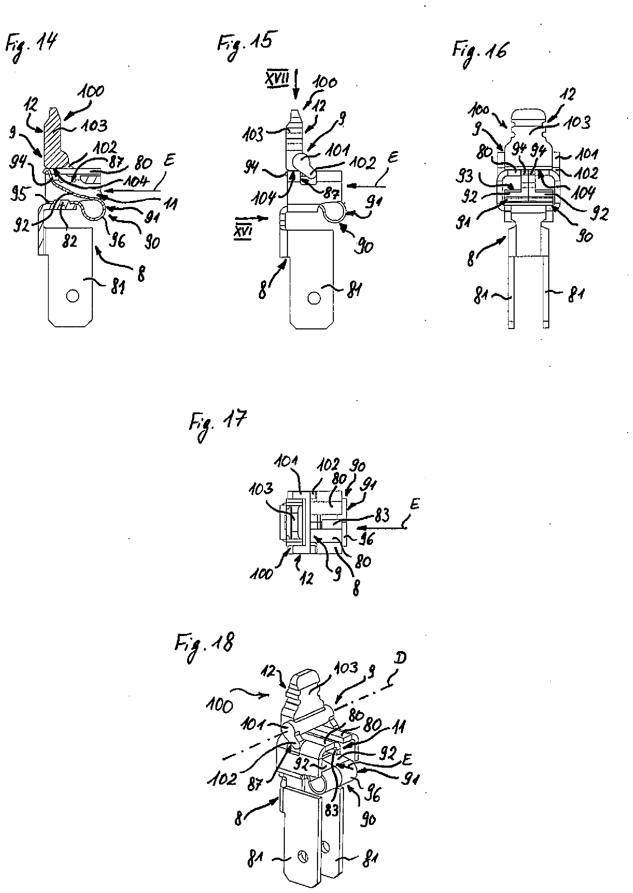

Der Klemmschenkel 92 kann an einem distalen Ende 93 eine Klemmkante zur Bildung der Klemmstelle K mit dem Kontaktabschnitt 80 in der Klemmposition aufweisen, wie diese insbesondere in den Darstellungen der Figuren 11 und 16 deutlich zu erkennen ist.

Die Klemmfeder 91 kann in einer bevorzugten Ausgestaltungsform geschlitzt ausgebildet sein, um wenigstens zwei unabhängig voneinander verschwenkbare Klemmschenkel 92 zu bilden, wie dies insbesondere dem ersten Ausführungsbeispiel der Figuren 1 bis 18 zu entnehmen ist.

Das Klemmelement 90 kann in dem Gehäuse 2 und/oder in dem Kontaktelement 8 gelagert sein. Wie insbesondere den Figuren 1, 9 und 19 zu entnehmen ist, ist in dem dargestellten Ausführungsbeispiel der Kabelanschlussdose 1 das Klemmelement 90 einzig in dem Kontaktelement 8 gelagert. Dazu ist das hier als Klemmfeder 91 ausgebildete Klemmelement 90 mit einem dem Klemmschenkel 92 abgewandten Anlageschenkel 95 in einem Halteabschnitt 82 des Kontaktelements 8 eingehängt. Klemmschenkel 92 und Anlageschenkel 95 sind hier über einen Federbogen 96 miteinander verbunden, so dass sich der Klemmschenkel 92 über den Federbogen 96 gegenüber dem im Kontaktelement 8 gelagerten Anlageschenkel 95 relativ zur Öffnung der Klemmstelle K verschwenken lässt. Der Anlageschenkel 95 könnte jedoch beispielsweise auch oder alternativ im Gehäuse 2 bzw. dem Gehäuse-Unterteil 3 bzw. dem Gehäuseabschnitt 35 gelagert sein.

Der Kontaktabschnitt 80 kann zusammen mit dem Klemmelement 90 - vorzugsweise mit dem Klemmschenkel 92 der Klemmfeder 91, wenn vorhanden - einen Einführkanal 11 zum Einführen der Adern des Anschlusskabels in einer Einführrichtung E wenigstens teilweise seitlich begrenzen, wie dies insbesondere den Darstellungen der Figuren 9, 13, 14 und 18 bis 21 zu entnehmen ist. Der Einführkanal 11 kann dabei mit der vorbeschriebenen Einführöffnung 350, wenn vorhanden, fluchten, wie dies beispielsweise den Figuren 1, 2 und 6 zu entnehmen ist.

Die Anschlussanordnung 9 kann bevorzugt ein Löseelement 100 aufweisen, welches mit einem Manipulationsabschnitt 94 des Klemmelements 90 derart zusammenwirkt, um das Klemmelement 90 wenigstens teilweise zwischen der Klemmposition und der Freigabeposition zu bewegen. Dies ist besonders bevorzugt den Schnittdarstellungen der Figuren 7 bis 9 und 14 sowie auch den Figuren 19 bis 21 zu entnehmen. In dem dargestellten Ausführungsbeispiel wirkt der Lösehebel 100 hier mit einem Auslöseabschnitt 104, welcher einfach durch eine flächige Rückseite des Lösehebels 100 gebildet ist, zusammen. Grundsätzlich können der Lösehebel 100 bzw. dessen Auslöseabschnitt 104 einerseits und der Manipulationsabschnitt 94 andererseits jede zum gewünschten Zusammenwirken korrespondierende Form bzw. Struktur aufweisen.

Wie insbesondere den Figuren 11, 16 sowie 19 bis 21 zu entnehmen ist, kann der Manipulationsabschnitt 94 sich bevorzugt von dem Klemmschenkel 92 und besonders bevorzugt von dessen Klemmkante 93 weg erstrecken, um somit für das Löseelement 100 besonders exponiert und folglich einfach erreichbar bereitzustehen.

In dem Ausführungsbeispiel der Figuren 1 bis 18 mit der geschlitzten Klemmfeder 91 weist diese je Klemmschenkel 92 einen entsprechenden Manipulationsabschnitt 94 auf, welche sich hier in Einführrichtung E gesehen (vgl. Figuren 11 und 16) mittig und parallel aneinander angrenzend erstrecken. Somit sind je Klemmschenkel 92 sicher rechts und links voneinander beabstandet die entsprechenden Klemmstellen K bereitgestellt, wie dies ebenso den Figuren 11 und 16 zu entnehmen ist. Entsprechend eingeführte Leiter können so sicher voneinander beabstandet eingesetzt und kontaktiert werden. Um eine sichere funktionale und insbesondere physische Trennung der Klemmstellen K dieser geschlitzten Variante zu erzielen, kann das Kontaktelement 8 in einem zentralen und in Einführrichtung der Klemmstelle K vorgelagerten Bereich nach unten vorspringend einen hier integral ausgebildeten Trennsteg 83 aufweisen, wie dieser beispielsweise in den Figuren 13 und 18 gezeigt ist. Die Klemmschenkel 92 der gemeinsamen Klemmfeder 91 werden hier bevorzugt durch ein gemeinsames Löseelement 100 bedient, wobei auch jedem Klemmschenkel grundsätzlich ein eigenes Löseelement 100 zugeordnet sein kann.

In dem Ausführungsbespiel der Figuren 19 bis 21 kann die einzige Klemmstelle K bevorzugt auch zentral vorgesehen sein. In diesem Fall erstrecken sich dann vorzugsweise die Manipulationsabschnitte 94 hier rechts und links der Klemmstelle K von dem Klemmschenkel 92 weg, um somit einen gleichmäßigen Angriffspunkt für das Löseelement 100 zum gleichmäßigen Öffnen der Klemmstelle K der Klemmfeder 91 zu ermöglichen. An dieser Stelle sei angemerkt, dass auch bei der nicht-geschlitzten Variante der Klemmfeder 91 eine zentrale Erstreckung eines einzelnen Manipulationsabschnitt 94, vergleichbar dem Ausführungsbeispiel der Figuren 1 bis 18, denkbar ist, um somit bezüglich der Mitte der Klemmfeder 91 seitlich versetzte Klemmstellen K bereitzustellen. Durch diesen Versatz ist es beispielsweise möglich, wie insbesondere den Figuren 1 und 2 zu entnehmen ist, auch mehrere Kontaktelemente 8 möglichst kompakt anzuordnen, indem dann die jeweiligen Klemmstellen K auf den einander abgewandten Seiten der Klemmfeder 91 genutzt werden; diese sind hier beispielsweise durch die entsprechenden Einführöffnungen 350 eindeutig zugänglich.

Bezüglich des hier tieferliegenden, mittigen Kontaktelements 8 kann einer der beiden Klemmstellen K der zwei durch die geschlitzte Ausführung der Klemmfeder 91 bereitgestellten Klemmschenkel 92 dazu dienen, den Erdungskontakt 10 hier dann über die Anschlussanordnung 9 mit dem Kontaktabschnitt 80 elektrisch zu verbinden. Der Erdungskontakt 10 kann hierzu eine Erdungslasche 13 aufweisen, die bspw. in Einführrichtung E in einen der Einführkanäle 11 eingesetzt wird, um so den Erdungskontakt 10 in der Klemmstelle K mit dem Kontaktabschnitt 80 elektrisch zu kontaktieren.

Das Löseelement 100 kann bevorzugt wenigstens teilweise in dem Kontaktelement 8 und/oder in dem Gehäuse 2 - hier vorzugsweise dem Gehäuse-Unterteil 3 bzw. dem Gehäuseabschnitt 35 - beweglich gelagert sein. Dabei ist beispielsweise eine translatorisch oder eine rotatorisch oder auch eine translatorisch und rotatorisch bewegliche Lagerung denkbar.

Das Löseelement 100 kann beispielsweise in Form eines Drückers oder, wie in den Ausführungsbeispielen der Figuren 1 bis 21 dargestellt, in Form eines Lösehebels 12 bereitgestellt sein bzw. diesen aufweisen. Der Lösehebel 12 kann einen Lagerabschnitt 101 zur drehbaren Lagerung des Lösehebels 12 um eine Drehachse D herum aufweisen, wie dies insbesondere den Figuren 13, 18, 20 und 21 zu entnehmen ist. Der Lagerabschnitt 101 dient dabei bevorzugt der drehbaren Lagerung des Lösehebels 12 in einem Lagerungsabschnitt 36 des Gehäuses 2 bzw. des Gehäuse-Unterteils 3 oder des Gehäuseabschnitts 35.

Der Lösehebel 12 kann einen zur Drehachse D radial beabstandeten Hebelabschnitt 102 aufweisen, welcher derart mit einem Konterabschnitt 87 des Kontaktelements 8 und/oder des Gehäuses 2, wie des Gehäuseabschnitts 35 bzw. des Gehäuse-Unterteils 3, zusammenwirkt, so dass die Drehachse D bei der Drehbewegung des Lösehebels 12 in die Freigabeposition zu der Freigabeposition hin - und damit (auch) translatorisch - versetzt wird. Dieser auch translatorische Versatz ist beispielsweise der Zusammenschau der Figuren 1 und 2 sowie der Figuren 7 und 8 und ebenso der Zusammenschau beispielsweise der Figuren 10 und 15 und der Zusammenschau der Figuren 20 und 21 zu entnehmen. Durch diese kombinierte Bewegung - insbesondere auch zu der Freigabeposition hin - kann auch auf geringstem Bauraum eine vergleichsweise große Betätigungsbewegung hier zum Verschwenken des Klemmschenkels 92 über den Manipulationsabschnitt 94 zur größtmöglichen Öffnung der Klemmstelle K erzielt werden.

Der Lösehebel 12 kann einen sich bevorzugt von der Drehachse D radial weg erstreckenden Hebelarm 103 zur Bewegung bzw. zur Drehung des Lösehebels 12 zwischen der Freigabeposition und der Klemmposition aufweisen. Dieser Hebelarm 103 ist beispielsweise den Figuren 13, 18, 20 und 21 zu entnehmen. Der Hebelarm 103 erstreckt sich dabei bevorzugt in einer Ebene und dient einem einfachen Manipulieren des Lösehebels 12 durch die Finger eines Bedieners.

Die vorliegende Erfindung ist durch die vorbeschriebenen Ausführungsbeispiele nicht beschränkt, sofern sie vom Gegenstand der folgenden Ansprüche umfasst ist. Insbesondere sind sämtliche Merkmale der vorliegenden Ausführungsbeispiele mit- und untereinander kombinierbar und austauschbar.

## Patentansprüche

1. Kabelanschlussdose (1) zur elektrischen Verbindung von Adern eines Anschlusskabels mit weiterführenden elektrischen Leitungen an einem elektrischen Gerät, aufweisend:
ein Gehäuse (2) mit
• einem Gehäuse-Unterteil (3) und einen Gehäuse-Deckel (4), welche wahlweise verschließbar sind, um einen Anschlussraum (A) zu umschließen, und wahlweise öffenbar sind, um den Anschlussraum (A) zum Verbindung der Adern des Anschlusskabels freizulegen, und
• einer Kabeldurchführung (6) zur Durchführung des Anschlusskabels in den Anschlussraum (A),
wenigstens ein Kontaktelement (8) mit einem Kontaktabschnitt (80) zur elektrischen Kontaktherstellung mit den Adern des Anschlusskabels in dem Anschlussraum (A), und
eine Anschlussanordnung (9) zum werkzeuglosen Verbinden und Lösen der Adern des Anschlusskabels mit dem Kontaktabschnitt (80).

2. Kabelanschlussdose (1) nach Anspruch 1, wobei das Kontaktelement (8) und/oder die Anschlussanordnung (9) wenigstens teilweise in einem Gehäuseabschnitt (35) des Gehäuses (2), vorzugsweise des Gehäuse-Unterteils (3), aufgenommen ist/sind,
wobei vorzugsweise der Gehäuseabschnitt (35) eine Einführöffnung (350) zum Einführen wenigstens einer der Adern des Anschlusskabels zu dem Kontaktabschnitt (80) hin aufweist.

3. Kabelanschlussdose (1) nach einem der vorhergehenden Ansprüche, wobei die Anschlussanordnung (9) ein Klemmelement (90) aufweist, welches zwischen einer Klemmposition, in der das Klemmelement (90) mit dem Kontaktabschnitt (80) eine Klemmstelle (K) zum elektrischen Verbinden der Adern des Anschlusskabels bildet, und einer Freigabeposition, in der die Klemmstelle (K) zum Lösen der Adern des Anschlusskabels freigelegt ist, werkzeuglos bewegbar ist.

4. Kabelanschlussdose (1) nach Anspruch 3, wobei das Klemmelement (90) eine Klemmfeder (91) mit wenigstens einem Klemmschenkel (92) aufweist, welcher zwischen der Klemmposition und der Freigabeposition verschwenkbar ist,
wobei vorzugsweise der Klemmschenkel (92) an einem distalen Ende (93) eine Klemmkante zur Bildung der Klemmstelle (K) mit dem Kontaktabschnitt (80) aufweist,
wobei vorzugsweise die Klemmfeder (91) geschlitzt ausgebildet ist, um wenigstens zwei unabhängig voneinander verschwenkbare Klemmschenkel (92) zu bilden.

5. Kabelanschlussdose (1) nach Anspruch 3 oder 4, wobei das Klemmelement (90) in dem Gehäuse (2) und/oder in dem Kontaktelement (8) gelagert ist.

6. Kabelanschlussdose (1) nach einem der Ansprüche 3 bis 5, wobei der Kontaktabschnitt (80) zusammen mit dem Klemmelement (90), vorzugsweise mit dem Klemmschenkel (92) der Klemmfeder (91), wenn vorhanden, einen Einführkanal (11) zum Einführen der Adern des Anschlusskabels in einer Einführrichtung (E) wenigstens teilweise seitlich begrenzen, wobei der Einführkanal (11) mit der Einführöffnung (350), wenn vorhanden, fluchtet.

7. Kabelanschlussdose (1) nach einem der Ansprüche 3 bis 6, wobei die Anschlussanordnung (9) ein Löseelement (100) aufweist, welches mit einem Manipulationsabschnitt (94) des Klemmelements (90) derart zusammenwirkt, um das Klemmelement (90) wenigstens teilweise zwischen der Klemmposition und der Freigabeposition zu bewegen,
wobei vorzugsweise der Manipulationsabschnitt (94) sich von dem Klemmschenkel (92), vorzugsweise von dessen Klemmkante (93), wenn vorhanden, weg erstreckt,
wobei vorzugsweise das Löseelement (100) wenigstens teilweise in dem Kontaktelement (8) und/oder in dem Gehäuse (2), vorzugsweise dem Gehäuseabschnitt (35), wenn vorhanden, beweglich gelagert ist, vorzugsweise translatorisch und/oder rotatorisch beweglich gelagert.

8. Kabelanschlussdose (1) nach Anspruch 7, wobei das Löseelement (100) einen Drücker oder einen Lösehebel (12) aufweist,
wobei vorzugsweise der Lösehebel (12) einen Lagerabschnitt (101) zur drehbaren Lagerung des Lösehebels (12) um eine Drehachse (D) herum aufweist, vorzugsweise zur drehbaren Lagerung in einem Lagerungsabschnitt (36) des Gehäuses (2) oder des Gehäuseabschnitts (35), wenn vorhanden,
wobei vorzugsweise der Lösehebel (12) einen zur Drehachse (D) radial beabstandeten Hebelabschnitt (102) aufweist, welcher derart mit einem Konterabschnitt (87) des Kontaktelements (8) oder des Gehäuses (2), wie des Gehäuseabschnitts (35), zusammenwirkt, so dass die Drehachse (D) bei der Drehbewegung des Lösehebels (12) in die Freigabeposition zu der Freigabeposition hin versetzt wird,
wobei vorzugsweise der Lösehebel (12) einen sich bevorzugt von der Drehachse (D) radial weg erstreckenden Hebelarm (103) zur Bewegung des Lösehebels (12) zwischen der Freigabeposition und der Klemmposition aufweist.

9. Kabelanschlussdose (1) nach einem der vorhergehenden Ansprüche, wobei das Kontaktelement (8) sich mit einem Anschlussabschnitt (81) zum elektrischen Anschluss mit weiterführenden elektrischen Leitungen an einem elektrischen Gerät aus dem Anschlussraum (A) und von diesem weg nach außerhalb des Gehäuses (2) erstreckt.

10. Kabelanschlussdose (1) nach einem der vorhergehenden Ansprüche, ferner aufweisend einen Erdungskontakt (10), welcher mit dem Kontaktelement (8) in elektrischer Verbindung steht oder integral mit diesem ausgebildet ist,
wobei vorzugsweise der Erdungskontakt (10) über die Anschlussanordnung (9) mit dem Kontaktabschnitt (80) elektrisch verbunden ist.

11. Kabelanschlussdose (1) nach einem der vorhergehenden Ansprüche, wobei das Kontaktelement (8) als Stanz-Biege-Teil ausgebildet ist, und/oder wobei die Kabelanschlussdose (1) ferner eine Vielzahl von den Kontaktelementen (8) oder den Kontaktabschnitten (80) aufweist, denen jeweils eine Anschlussanordnung (9) zum werkzeuglosen elektrischen Verbinden und Lösen der Adern des Anschlusskabels mit dem jeweiligen Kontaktabschnitt (80) zugeordnet ist.

12. Kabelanschlussdose (1) nach einem der vorhergehenden Ansprüche, wobei das Gehäuse (2) ferner eine Zugentlastung (7) zum Arretieren des durch die Kabeldurchführung (6) geführten Anschlusskabels in der Kabelanschlussdose (1) aufweist.

13. Kabelanschlussdose (1) nach Anspruch 12, wobei die Zugentlastung (7) einen Zugentlastungsbügel (70) aufweist, welcher bevorzugt schwenkbar in dem Gehäuse (2) zwischen einer Offenstellung, in der die Kabeldurchführung (6) zum Einlegen eines Anschlusskabels freiliegt, und einer Geschlossenstellung, in der die Kabeldurchführung (6) geschlossen ist, bewegbar ist,
wobei der Zugentlastungsbügel (70) ferner bevorzugt derart ausgebildet ist, dass er in der Geschlossenstellung mit dem Gehäuse (2) verrastet.

14. Kabelanschlussdose (1) nach Anspruch 12 oder 13, wobei die Zugentlastung (7) Klemmabschnitte (34, 74) des Gehäuses (2) und bevorzugt ferner des Zugentlastungsbügels (70) aufweist, um wenigstens im geschlossenen Zustand des Gehäuses (2) ein durch die Kabeldurchführung (6) geführtes Anschlusskabel in der Kabelanschlussdose (1) zu halten,
wobei die Klemmabschnitte (34, 74) bevorzugt wenigstens im geschlossenen Zustand des Gehäuses (2) wenigstens teilweise im Bereich der oder in Verlängerung der Kabeldurchführung (6) vorgesehen sind und die Kabeldurchführung (6) ferner bevorzugt wenigstens teilweise seitlich oder beidseits begrenzen.

15. Kabelanschlussdose (1) nach einem der vorhergehenden Ansprüche, wobei das Gehäuse-Unterteil (3) und der Gehäuse-Deckel (4) über ein Verbindungselement (5), wie ein Scharnier, beweglich miteinander verbunden sind, um den Anschlussraum (A) wahlweise freizulegen und zu verschließen.
